# DEMANDE DE BREVET EUROPEEN

(11) **EP 0 837 274 A1**
(43) Date de publication de la demande: **22.04.1998**
(21) Numéro de dépôt: 97402427.5
(22) Date de dépôt: 14.10.1997
(51) Int. Cl.: F16K 31/06, F16K 27/00, B60G 17/056

(54) **Agencement d'électrovanne pourvu d'un dispositif de fixation sur un support et bloc hydraulique équipé d'un tel agencement**

(30) Priorité: 15.10.1996 FR 9612570
(71) Demandeur: AUTOMOBILES PEUGEOT, 75116 Paris (FR); AUTOMOBILES CITROEN, 92200 Neuilly-sur-Seine (FR)
(72) Inventeur: Veret, Dominique, 92150 Suresnes (FR); Tranzer, Alain, 92290 Chatenay-Malabry (FR)
(74) Mandataire: Berger, Helmut

(57) **Abrégé**

L'invention concerne un agencement d'électrovanne du type comprenant une électrovanne et un dispositif de fixation de celle-ci sur un support tel qu'un bloc hydraulique.

Cet agencement est caractérisé en ce qu'il comprend des moyens de montage amovible (2) de l'électrovanne (1) sur le support (3).

L'invention est utilisable pour des blocs hydrauliques.

## Description

L'invention concerne un agencement d'électrovanne du type comprenant une électrovanne et un dispositif de fixation de celle-ci sur un support tel qu'un bloc hydraulique et un bloc hydraulique équipé d'un tel agencement.

On connaît déjà des agencements d'électrovanne dans lesquels l'électrovanne est montée sur son support par un sertissage, comme par exemple dans des systèmes de freinage pour véhicule automobile.

Ces agencements connus présentent l'inconvénient qu'en cas d'avarie, il n'est pas possible de remplacer l'électrovanne seule, et qu'il faut changer le bloc entier, ce qui représente un coût relativement important.

L'invention a pour but de résoudre ce problème en proposant un agencement d'électrovanne qui permet un montage amovible de l'électrovanne.

Pour atteindre ce but, l'agencement d'électrovanne selon l'invention est caractérisé en ce qu'il comprend des moyens de montage amovible de l'électrovanne sur le support.

Selon une caractéristique de l'invention, les moyens de montage amovible comprennent une bride qui est susceptible d'être fixée amoviblement sur le support, présente une partie profilée coopérant avec une portion profilée de forme conjugée de l'électrovanne et est adaptée pour retenir cette dernière dans sa position montée tant que la bride est fixée sur le support.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue en coupe d'un agencement d'électrovanne selon l'invention, dans la direction axiale de l'électrovanne.

La figure 2 est une vue similaire à celle de la figure 1, mais avec arrachement, et montre le montage d'un calculateur sur l'électrovanne.

La figure 3 montre, de façon schématique, un bloc hydraulique pour une suspension hydropneumatique de véhicule automobile, pourvu de plusieurs agencements d'électrovanne selon l'invention.

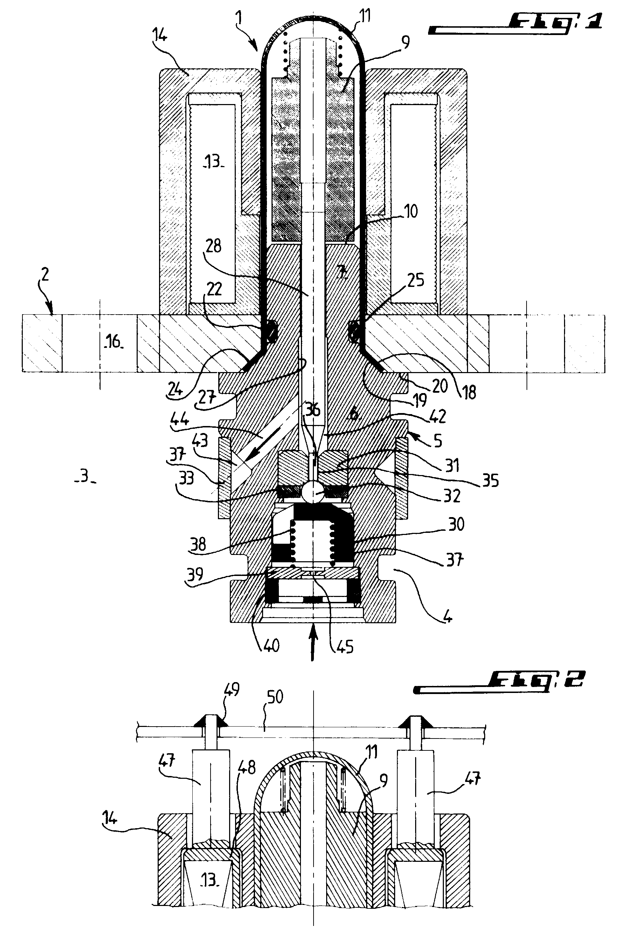

Comme il ressort de la figure 1, un agencement d'électrovanne selon l'invention comprend essentiellement une électrovanne 1 et une bride 2 pour la fixation de cette dernière sur un support 3 tel qu'un bloc hydraulique pourvu d'un évidement 4 dans lequel est logé le corps 5 de l'électrovanne et qui présente alors une forme conjugée de ce corps. A l'état fixé sur le support, de la bride 2, l'électrovanne est retenue sur le support grâce à des parties profilées coopérantes de la bride et de l'électrovanne, comme il sera décrit ci-après.

L'électrovanne comprend le corps sus-mentionné 5 qui se compose de deux parties cylindriques, à savoir une partie inférieure 6 engagée dans l'évidement 4 du support 3 et une partie supérieure 7 de plus faible diamètre, un noyau 9 monté mobile dans l'axe de la partie supérieure 7, avec interposition d'une cale d'entrefer 10, un tube 11 en un matériau amagnétique entourant le noyau 9 et la partie 7, ainsi qu'un ensemble formé par une bobine 13 et une masse polaire 14 et entourant coaxialement le tube 11. Cet ensemble repose, à l'état assemblé, sur la surface supérieure de la bride 2. Cette dernière se fixe sur le support 3, par exemple à l'aide de vis non représentées mais destinées à passer à travers des alésages 16 pratiqués dans la bride 2 à côté de la bobine 13 et donc librement accessible. On constate que la bobine est montée coulissante sur le tube 11, le cas échéant, à friction, de façon amovible.

Le tube 11, de forme cylindrique, présente à son extrémité inférieure une partie évasée 18 en forme de cône et prenant appui sur une zone de forme conjugée 19 du corps 6, située entre une surface d'épaulement radiale 20 de la partie 6 et la partie 7 de plus faible diamètre du corps 5. Comme on le voit clairement sur la figure, le perçage 22 qui permet le montage glissant de la bride 2 sur le tube 11 est également évasé, en 24, au niveau de la face inférieure de la bride qui repose sur le support 3, de façon conjuguée à la face extérieure de la partie évasée 18 du tube 11 pour que cette partie évasée 18 du tube soit emprisonnée entre la partie évasée 24 de la bride et la zone inclinée 19 du corps 6 quand la bride est fixée sur le bloc 3.

L'étanchéité sous pression de l'électrovanne ainsi montée sur le corps 3 et fixée dans cette position par la bride 2 est assurée par un joint torique 25 engagé dans une gorge annulaire pratiquée dans une zone de la partie 7 située à l'intérieur de l'orifice de passage 22 de la bride 2. Le joint est maintenu en position de serrage par le tube, lui-même maintenu par la bride.

Le corps 5 est traversé axialement par un perçage qui comprend une partie supérieure 27 assurant le passage d'un poussoir 28 solidaire du noyau 9 et une partie inférieure de plus grand diamètre 30 dans la partie 6 du corps 5. Cet évidement 30 est ouvert à l'extrémité libre de la partie 6 du corps 5. Son fond loge un dispositif de soupape comprenant un siège 31 et une bille 32 guidée dans une rondelle 33. Le siège 31 est traversé par un orifice 35 à travers lequel passe l'extrémité inférieure 36 de plus faible diamètre du poussoir 28, qui est destiné à soulever la bille 32 de son siège lorsque le noyau 9 se déplace jusqu'au contact sur la cale d'entrefer 10. L'évidement 30 loge encore un poussoir 37 qui est destiné à repousser la bille 32 sur son siège, sous l'effet d'un ressort 38 prenant appui sur une plaquette 39 maintenue en position par un filtre 40 lui-même serti dans l'extrémité de l'évidement 30.

On constate encore que la partie supérieure 27 du perçage de passage du poussoir 28 présente au-dessus du siège 31 un espace annulaire 42 qui est en communication avec une rainure 43 dans la face périphérique de la partie 6 du corps 5, à travers un conduit incliné 44. La rainure est recouverte par un filtre 37 qui comprend un orifice non représenté constituant l'orifice de sortie de l'électrovanne, l'entrée étant formée par l'évidement 30 de la partie 6, comme cela est symbolisé par une flèche. Un calibrage du débit, en fonction de la pression du fluide, est assuré par l'orifice 45 de la plaquette 39.

Concernant le fonctionnement de l'électrovanne, il suffit d'indiquer que l'électrovanne, lorsqu'elle est excitée par un courant électrique, génère un champ magnétique à travers la masse polaire 14, la bride 2, le corps 6, le noyau 9 et le tube guide amagnétique 11 pour créer un effort sur le noyau 9. Cet effort provoque le déplacement vers le corps 6 du noyau jusqu'au placage de celui-ci sur la cale d'entrefer 10. Sous l'effet du déplacement du noyau 9, le poussoir 28 soulève la bille 32 de son siège si bien que du fluide sous pression peut s'écouler à travers le corps 6 pour parvenir dans la rainure de sortie 43.

Lors de la suppression de l'alimentation électrique, le poussoir 37 ramène la bille 32 sur son siège 31 pour assurer une étanchéité entre l'entrée et la sortie de l'électrovanne.

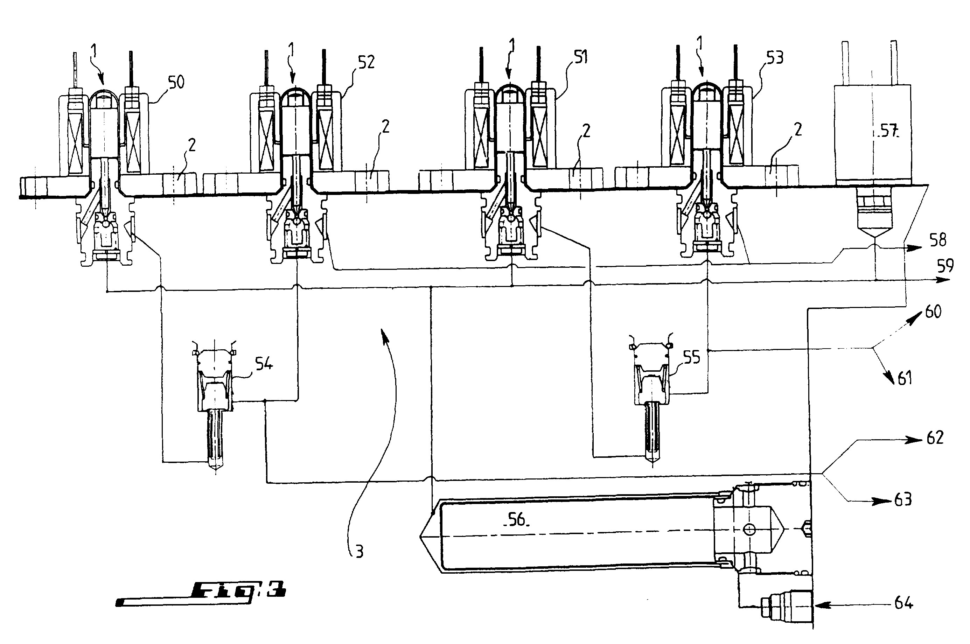

L'électrovanne peut être alimentée électriquement par un calculateur dont le montage sur l'électrovanne est montré sur la figure 2. On constate que la bobine 13 est fixée, à l'aide de pièces intermédiaires 47 solidaires de la carcasse indiquée en 48 de la bobine, par soudage en 49, à la paroi du calculateur désignée par 50. Il est alors possible de démonter l'ensemble bobine 13-masse polaire 14 avec le calculateur par coulissement sur le tube 11.

L'avantage principal de la structure qui vient d'être décrite est la double démontabilité de l'électrovanne. D'une part, il est possible, après démontage de la bride 2, d'extraire le sous-ensemble appelé cartouche hydraulique et formé par le corps 5 et ses constituants et par le tube 11 emprisonnant le noyau 9, sans aucune destruction du support. Puis il est également possible de désassembler le tube 11 du corps 5 sans aucune destruction des composants internes et donc de minimiser le coût de l'échange des pièces défectueuses. Par conséquent, l'invention permet de remplacer la cartouche hydraulique sans aucune destruction du support et de remplacer aisément les composants internes de l'électrovanne. L'invention offre donc la possibilité de minimiser les coûts en phase de mise au point, en phase de démarrage de production et en après-vente. Il est également possible de démonter la bobine 13 du tube par simple coulissement axial.

Les avantages que procurent la présente invention ressortent clairement de la figure 3 qui montre l'application de l'invention à un système de commande d'une suspension hydropneumatique de véhicule automobile tel que décrit dans la demande de brevet français N° 96 08 351 du 4 Juillet 1996 appartenant aux demanderesses. La description de ce système est incorporée par cette référence au texte descriptif de la présente invention.

Comme il est décrit dans le document sus-mentionné, le système de commande comprend un bloc hydraulique formant le bloc de support 3 de la figure 1 et sur lequel sont montées, à l'aide de brides 2, quatre électrovannes identiques à l'électrovanne 1, à savoir les électrovannes d'admission avant et arrière 50 et 51 et les deux électrovannes d'échappement avant et arrière respectivement 52 et 53. Les références 54 et 55 indiquent respectivement des clapets anti-retour avant et arrière. Le clapet 54 est monté entre la sortie de l'électrovanne d'admission avant 50 et l'électrovanne d'échappement avant 52 tandis que le clapet 55 est disposé entre la sortie de l'électrovanne d'admission arrière 51 et l'électrovanne d'échappement arrière 53. La figure montre encore en 56 un filtre haute pression et en 57 un manocontact. Les références 58 à 62 désignent respectivement un retour réservoir, une sortie haute pression, une sortie de vis de purge de suspension arrière, une sortie vers la suspension arrière, une sortie de vis de purge de suspension avant, une sortie vers la suspension avant et une arrivée conjoncteur.

On constate que les voies de communication entre les différentes entrées et sorties susmentionnées et dans lesquelles les électrovannes sont placées sont constituées par des conduits pratiqués dans le bloc.

Etant donné le nombre des électrovannes qui sont montées sur le bloc hydraulique, la possibilité de démonter les électrovannes, notamment pour remplacer leurs cartouches hydrauliques sans aucune destruction de ce bloc hydraulique de distribution, met clairement en relief la particularité de l'invention et les avantages susmentionnés qu'elle procure.

## Revendications

1. Agencement d'électrovanne du type comprenant une électrovanne et un dispositif de fixation de celle-ci sur un support tel qu'un bloc hydraulique, l'agencement comportant des moyens de montage amovibles de l'électrovanne sur le support et étant du type comportant une première partie qui comprend un équipage mobile et une cartouche hydraulique enfermée au moins partiellement dans un tube en un matériau amagnétique, et une deuxième partie comprenant une bobine, caractérisée en ce que ledit tube (11) et ladite cartouche (5, 9) sont montés, de façon séparable l'un de l'autre, sur le support (3).

2. Agencement d'électrovanne selon la revendication 1, caractérisé en ce que les moyens de montage amovible (2) comprennent une bride (2) qui est susceptible d'être fixée amoviblement sur le support (3) et présente une partie profilée (24) coopérant avec une portion profilée (18, 19) de forme conjuguée de l'électrovanne et adaptée pour retenir cette dernière dans sa position montée tant que la bride (2) est fixée sur le support (3).

3. Agencement d'électrovanne selon la revendication 2, caractérisé en ce que la bride (2) est fixée sur le support (3) par des moyens amovibles tels que des vis de fixation.

4. Agencement selon l'une des revendications précédentes, caractérisé en ce que le tube (11) comporte une partie engagée dans un orifice (22) de la bride (2) et en ce que la partie engagée comporte une portion (18) venant en prise derrière la surface inférieure de la bride (2), qui est adjacente au support (3).

5. Agencement d'électrovanne selon la revendication 4, caractérisé en ce que l'extrémité ouverte d'introduction de la cartouche précitée (6, 9) du tube (11) est évasée (18) et prend appui sur une zone évasée de la bride (2), qui s'élargit de façon conjuguée, en direction de la face inférieure adjacente au support (3).

6. Agencement d'électrovanne selon la revendication 5, caractérisé en ce que l'extrémité évasée (18) du tube (11) et la portion évasée (24) de la bride (2) présentent des profils coniques conjugués.

7. Agencement d'électrovanne selon l'une des revendications 4 à 6, caractérisé en ce que la bride (2) est montée glissante sur le tube (11).

8. Agencement d'électrovanne selon l'une des revendications 3 à 5, caractérisé en ce que la deuxième partie précitée contenant la bobine (13) est montée coaxialement sur le tube (11) et repose à l'état monté de l'électrovanne (1) sur la surface supérieure de la bride (2).

9. Agencement d'électrovanne selon l'une des revendications 4 à 8, pour une électrovanne comportant un dispositif de commande tel qu'un calculateur, caractérisé en ce que l'électrovanne est au moins partiellement solidaire du calculateur.

10. Agencement d'électrovanne selon la revendication 9, caractérisé en ce que le calculateur est monté sur la bobine (13) de l'électrovanne.

11. Bloc hydraulique, notamment pour un système de commande d'une suspension hydropneumatique d'un véhicule automobile, pourvu d'une source de fluide sous pression, d'un réservoir de retour, d'une pluralité de canaux internes et, d'au moins une électrovanne destinée à établir des voies d'écoulement de fluide entre la suspension, ladite source et ledit réservoir à travers le bloc, à l'aide de ladite pluralité de canaux internes, caractérisé en ce qu'il comprend au moins un agencement d'électrovanne selon l'une des revendications 1 à 10, le bloc hydraulique constituant le support (3) précité.
